# EUROPÄISCHE PATENTSCHRIFT

(11) **EP 1 628 868 B1**
(45) Veröffentlichungstag und Bekanntmachung des Hinweises auf die Patenterteilung: **06.09.2006**
(21) Anmeldenummer: 04732567.5
(22) Anmeldetag: 13.05.2004
(51) Int. Cl.: B62B 3/14

(54) **EINKAUFSWAGEN**
SHOPPING TROLLEY
CHARIOT DE MAGASIN

(30) Priorität: 05.06.2003 DE 20308804 U
(43) Veröffentlichungstag der Anmeldung: 01.03.2006
(73) Patentinhaber: WANZL METALLWARENFABRIK GMBH, 89336 Leipheim (DE)
(72) Erfinder: SCHEFFLER, Hans, 89233 Neu-Ulm / Burlafingen (DE)
(86) Internationale Anmeldenummer: PCT/DE2004/000994
(87) Internationale Veröffentlichungsnummer: WO 2004/108499

(56) Entgegenhaltungen:
- DE-A- 4 407 694
- DE-A- 19 931 811
- DE-U- 29 709 812
- US-A- 5 611 597

## Beschreibung

Die Erfindung betrifft einen Einkaufswagen mit einem Korb und mit wenigstens einer über dem Korb angeordneten Babyschale, die mit Ihrem Fußende nahe des Schiebegriffes und mit ihrem Rücken an einer Querverbindung abgestützt ist, welche die beiden Seitenwände des Korbes verbindet, wobei zwei an den Seitenwänden des Korbes befestigbare Befestigungselemente vorgesehen sind und wobei die Querverbindung mit einem Stützabschnitt ausgestattet ist, der ein Rohr trägt, das um die Längsachse des Stützabschnittes drehbar gelagert ist.

Einkaufswagen dieser Art sind im Prospekt Nr. 540/2001 der Anmelderin näher beschrieben. Man ist bestrebt, die Babyschalen an den Einkaufswagen so anzuordnen, dass ein in einer Babyschale befindliches Kind angenehm liegen kann. Deshalb dürfen die Babyschalen nicht zu steil und auch nicht zu flach angeordnet sein. Um dies zu erreichen sind die Querverbindungen, an welchen die Babyschalen mit ihrem Rücken aufliegen, unterschiedlich hoch ausgebildet, um möglichst viele der unterschiedlichen auf dem Markt befindlichen Einkaufswagentypen mit Babyschalen ausstatten zu können. Dies hat zur Entwicklung einer relativ hohen Anzahl von Querverbindungen geführt, was aus Sicht einer kostengünstigen Herstellung nicht als optimal bezeichnet werden kann. Man hat deshalb versucht, die Anzahl der Querverbindungen zu reduzieren, was allerdings dazu geführt hat, dass Einkaufswagen mit Babyschalen produziert worden sind, bei denen die Babyschalen nicht die gewünschte ideale Lage aufweisen. Als nachteilig hat sich dabei herausgestellt, dass die Befestigungselemente der Querverbindungen nicht immer in der gewünschten Lage befestigbar sind, weil die aus sich kreuzenden Gitterstäben gefertigten Körbe nur Befestigungsstellen zulassen, die in gewissen Abständen angeordnet sind. Hinzu kommt, dass die bisher bekannten Querverbindungen starre Gebilde sind, die eine optimale Lageanpassung der Babyschalen einfach nicht zulassen.

Der Erfindung liegt deshalb die Aufgabe zugrunde, einen Einkaufswagen der hier vorliegenden Art so weiterzuentwickeln, dass sich der eben geschilderte Nachteil vermeiden lässt.

Die Lösung der Aufgabe besteht darin, dass der Stützabschnitt zwei Stützarme aufweist, die mit den Befestigungselementen gelenkig so verbunden sind, dass die Querverbindung um eine horizontale Achse verschwenkbar ist.

Der Vorteil der aufgefundenen Lösung besteht darin, dass es durch die bewegliche Gestaltung der Querverbindung möglich ist, die Querverbindung an den Seitenwänden des Korbes in einer Lage anzubringen, die bei einer starren Querverbindung ungünstig wäre, wobei aber nun trotzdem eine optimale Gebrauchslage der Babyschale herbeiführbar ist, weil dies die bewegliche Ausbildung der Querverbindung zulässt. Gestaltet man die Querverbindung im Rahmen einer Ausgestaltung auch längenveränderbar, so kann ein Großteil bekannter und unterschiedlicher Einkaufswagentypen mit ein- und derselben Querverbindung ausgestattet werden. Solche Querverbindungen lassen sich somit in relativ hohen Stückzahlen kostenkünstig produzieren.

Die Erfindung wird anhand von Ausführungsbeispielen näher erläutert. Es zeigt
Fig. 1 einen mit einer Babyschale ausgestatteten Einkaufswagen sowie
Fig. 2 eine Querverbindung.

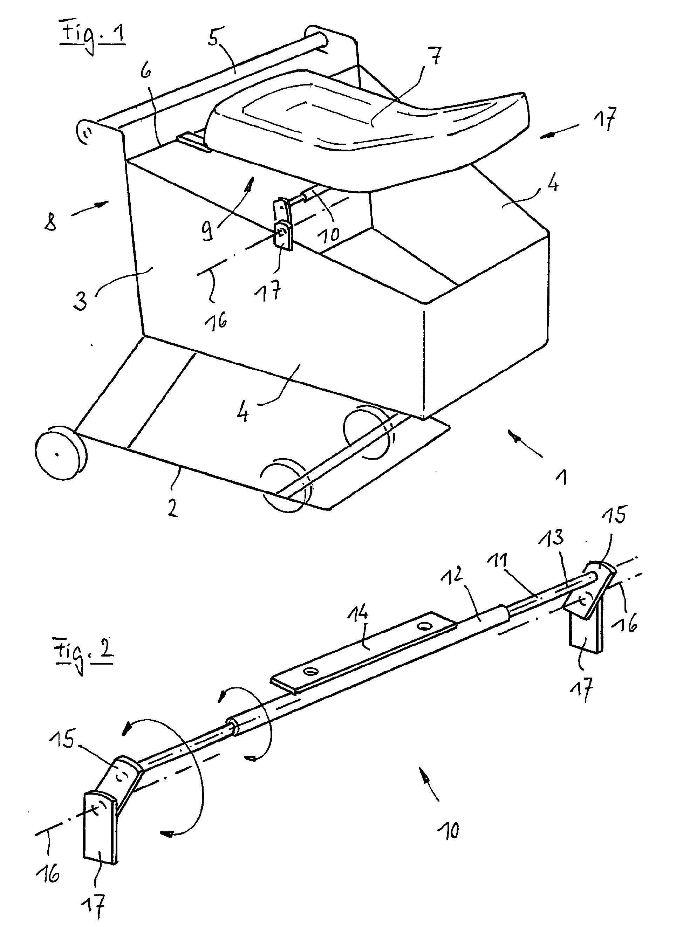

Der in Fig. 1 dargestellte Einkaufswagen 1 steht stellvertretend für alle bekannten Einkaufswagen 1, die in der Praxis aufzufinden sind. Der Einkaufswagen 1 weist demnach ein Fahrgestell 2 auf, das einen Korb 3 zur Aufnahme von Einkaufsgut trägt. In seinem hinteren Bereich ist der Einkaufswagen 1 mit einem Schiebegriff 5 ausgestattet. Der Korb 3 trägt eine Babyschale 7 zur Aufnahme eines Kleinkindes in liegender Lage. Die über dem Korb 3 angeordnete Babyschale 7 ist mit ihrem Fußende 8 nahe des Schiebegriffes 5 bevorzugt an einem Querstab 6 und mit ihrem Rücken 9 an einer Querverbindung 10 abgestützt, welche die beiden Seitenwände 4 des Korbes 3 verbindet. An jeder Seitenwand 4 befindet sich ein Befestigungselement 17. Die Querverbindung 10 ist an den beiden Befestigungselementen 17 um eine horizontale Achse 16 schwenkbar gelagert.

Die in Fig. 2 dargestellte Querverbindung 10 weist einen horizontal angeordneten Stützabschnitt 11 auf, auf dem ein Rohr 12 um die Längsachse 13 des Stützabschnittes 11 drehbar gelagert ist. Das Rohr 12 trägt im Beispiel wenigstens einen,Befestigungsabschnitt 14, an welchem die Babyschale 7 mit ihrem Rücken 9 lösbar befestigt wird. Der Befestigungsabschnitt 14 kann außermittig, also seitenversetzt am Rohr 12 angeordnet sein. Der Stützabschnitt 11 trägt an seinen beiden Enden jeweils einen vertikal angeordneten Stützarm 15. Jeder Stützarm 15 ist an einem Befestigungselement 17 um die gemeinsame horizontale Achse 16 schwenkbar gelagert. Anhand der Pfeile ist ersichtlich, dass sich das Rohr 12 um die Längsachse 13 des Stützabschnittes 11 und die Querverbindung 10 um die horizontale Achse 16 drehen bzw. verschwenken lassen.

Der Stützabschnitt 11 kann zweigeteilt sein, wobei je ein rundstabförmiger Abschnitt von außen her in das Rohr 12 eingeführt ist. Auf diese Weise lässt sich die Länge der Querverbindung 10 verändern.

Wenn gewünscht, kann auch auf den Befestigungsabschnitt 14 verzichtet werden. In diesem Falle liegt dann die Babyschale 7 mit ihrem Rücken 9 auf dem Rohr 12, oder bei nicht erfindungsgemäßen Fehlen des Rohres 12, auf dem Stützabschnitt 11 auf.

## Patentansprüche

1. Einkaufswagen (1) mit einem Korb (3) und mit wenigstens einer über dem Korb (3) angeordneten Babyschale (7), die mit ihrem Fußende (8) nahe des Schiebegriffes (5) und mit ihrem Rücken (9) an einer Querverbindung (10) abgestützt ist, welche die beiden Seitenwände (4) des Korbes (3) verbindet, wobei zwei an den Seitenwänden (4) des Korbes (3) befestigbare Befestigungselemente (17) vorgesehen sind und wobei die Querverbindung (10) mit einem Stützabschnitt (11) ausgestattet ist, der ein Rohr (12) trägt, das um die Längsachse (13) des Stützabschnittes (11) drehbar gelagert ist, **dadurch gekennzeichnet, dass** der Stützabschnitt (11) zwei Stützarme (15) aufweist, die mit den Befestigungselementen (17) gelenkig so verbunden sind, dass die Querverbindung (10) um eine horizontale Achse (16) verschwenkbar ist.

2. Einkaufswagen nach Anspruch 1, **dadurch gekennzeichnet, dass** am Rohr (12) wenigstens ein Befestigungsabschnitt (14) vorgesehen ist, der zum Befestigen der Babyschale (7) an der Querverbindung (10) bestimmt ist.

3. Einkaufswagen nach Anspruch 2, **dadurch gekennzeichnet, dass** der Befestigungsabschnitt (14) außermittig, also seitenversetzt, am Rohr (12) angeordnet ist.

4. Einkaufswagen nach einem der Ansprüche 1 bis 3, **dadurch gekennzeichnet, dass** der Stützabschnitt (11) zweigeteilt ist.

## Claims

1. A shopping trolley (1) having a basket (3) and at least one baby seat (7) which is arranged above the basket (3) and of which the foot end (8) is supported in the vicinity of the pushing handle (5) and the back (9) is supported on a cross connection (10) connecting the two side walls (4) of the basket (3), wherein two fixing members (17) fixable to the side walls (4) of the basket (3) are provided and wherein the cross connection (10) is provided with a supporting portion (11) carrying a tube (12) which is mounted so as to be rotatable about the longitudinal axis (13) of the supporting portion (11), **characterised in that** the supporting portion (11) has two supporting arms (15) which are articulated on the fixing members (17) in such a way that the cross connection (10) is pivotable about a horizontal axis (16).

2. A shopping trolley according to claim 1, **characterised in that** at least one fixing portion (14) is provided on the tube (12) and is intended to fix the baby seat (7) to the cross connection (10).

3. A shopping trolley according to claim 2, **characterised in that** the fixing portion (14) is eccentrically arranged on the tube (12), i.e. is laterally displaced.

4. A shopping trolley according to any one of claims 1 to 3, **characterised in that** the supporting portion (11) is divided into two.

## Revendications

1. Chariot de supermarché (1) avec un panier (3) et avec au moins un porte-bébé (7) disposé sur le panier (3), l'extrémité formant pied (8) du porte-bébé repose à proximité de la poignée coulissante (5) et son dos repose sur une entretoise transversale (10), laquelle relie les deux parois latérales (4) du panier (3), deux éléments de fixation (17) pouvant être fixés sur les parois latérales (4) du panier (3) étant prévus et l'entretoise transversale (10) étant équipée d'une partie de support (11), qui comporte un tube (12) disposé de manière mobile autour de l'axe longitudinal (13) de la partie de support (11), **caractérisé en ce que** la partie de support (11) présente deux bras-supports (15) qui sont reliés aux éléments de fixation (17) de manière articulée, de telle sorte que l'entretoise transversale (10) est orientable autour d'un axe horizontal (16).

2. Chariot de supermarché selon la revendication 1, **caractérisé en ce qu'**il est prévu sur le tube (12) au moins une partie de fixation (14) qui est définie pour fixer le porte-bébé (7) à l'entretoise transversale (10).

3. Chariot de supermarché selon la revendication 2, **caractérisé en ce que** la partie de fixation (14) est disposée de manière excentrée, c'est-à-dire décalée vers le côté, sur le tube (12).

4. Chariot de supermarché selon l'une quelconque des revendications 1 à 3, **caractérisé en ce que** la partie de support (11) est en deux parties.
